# EUROPÄISCHE PATENTSCHRIFT

(11) **EP 1 336 038 B1**
(45) Veröffentlichungstag und Bekanntmachung des Hinweises auf die Patenterteilung: **06.09.2006**
(21) Anmeldenummer: 01993752.3
(22) Anmeldetag: 10.10.2001
(51) Int. Cl.: F02D 41/02, F01N 3/023, F01N 9/00

(54) **VERFAHREN UND VORRICHTUNG ZUR STEUERUNG EINES ABGASNACHBEHANDLUNGSSYSTEMS**
METHOD AND DEVICE FOR CONTROLLING AN EXHAUST GAS AFTERTREATMENT SYSTEM
PROCEDE ET DISPOSITIF DE COMMANDE D'UN MOTEUR A COMBUSTION INTERNE COMPORTANT UN SYSTEME DE TRAITEMENT SUBSEQUENT DE GAZ D'ECHAPPEMENT

(30) Priorität: 11.11.2000 DE 10056034
(43) Veröffentlichungstag der Anmeldung: 20.08.2003
(73) Patentinhaber: ROBERT BOSCH GMBH, 70442 Stuttgart (DE)
(72) Erfinder: PLOTE, Holger, 70736 Fellbach-Oeffingen (DE); SCHERNEWSKI, Ralf, 76133 Karlsruhe (FR); WALTER, Michael, 70806 Kornwestheim (DE); HARNDORF, Horst, 71701 Schwieberdingen (DE)
(86) Internationale Anmeldenummer: PCT/DE2001/003885
(87) Internationale Veröffentlichungsnummer: WO 2002/038933

(56) Entgegenhaltungen:
- EP-A- 0 867 604
- EP-A- 0 943 786
- WO-A-01/61162
- WO-A-99/35386
- DE-A- 19 746 855
- DE-A- 19 906 287
- FR-A- 2 774 421
- US-A- 4 881 369

## Beschreibung

### Stand der Technik

Die Erfindung betrifft ein Verfahren und eine Vorrichtung zur Steuerung der Regeneration eines Partikelfilters im Abgassystem einer Brennkraftmaschine gemäß den Oberbegriffen der unabhängigen Ansprüche.

Ein solches Verfahren und eine solche Vorrichtung zur Steuerung der Regeneration eines Partikelfilters im Abgassystem einer Brennkraftmaschine sind aus der DE 199 06 287 A bekannt geworden. Dort wird als Zustandsgröße die Beladung des Partikelfilters erfasst und bei Überschreiten bestimmter Werte ein Sonderbetriebszustand eingeleitet, bei welchem das Partikelfilter durch geeignete Maßnahmen regeneriert wird.

Die Regeneration erfolgt dabei lediglich abhängig von der Beladung des Partikelfilters, das heißt, von der im Partikelfilter befindlichen Rußmasse, die durch geeignete Verfahren ermittelt wird. Jede Regeneration des Partikelfilters benötigt zusätzlichen Kraftstoff, der beispielsweise bei einer Kraftstoff-Nacheinspritzung zugemessen wird oder der zur Erhöhung der Abgastemperatur geeignet eingespritzt wird.

Aus der US 4,881,369 A ist eine Steuerung der Regeneration eines Partikelfilters bekannt geworden, welche die Partikelfilter-Regeneration einleitet, wenn die Abgastemperatur in einem bestimmten Bereich liegt und der Differenzdruck über dem Partikelfilter einen Referenzwert übersteigt. Nur wenn beide Bedingungen gleichzeitig erfüllt sind, wird die Regeneration durchgeführt. Eine entsprechende Vorgehensweise liegt auch dem Gegenstand der FR 2 774 427 A zugrunde.

Aus der DE 195 04 184 A ist es bekannt geworden, die Regeneration eines Partikelfilters nicht nur dann durchzuführen, wenn die Regeneration unbedingt erforderlich ist, sondern auch dann, wenn die stromabwärts hinter dem Partikelfilter gemessene Temperatur einen vorgegebenen Schwellenwert übersteigt. In diesem Fall wird davon ausgegangen, dass das Partikelfilter bereits eine hohe Betriebstemperatur aufweist, sodass die Regeneration des Partikelfilters mit geringem Kraftstoffaufwand durchgeführt werden kann.

Der Erfindung liegt die Aufgabe zugrunde, bei einem Verfahren und einer Vorrichtung zur Steuerung der Regeneration eines Partikelfilters im Abgassystem einer Brennkraftmaschine den Energie-Mehrverbrauch zu vermindern, der durch die Regeneration des Partikelfilters auftritt.

### Vorteile der Erfindung

Das erfindungsgemäße Verfahren zur Steuerung der Regeneration eines Partikelfilters im Abgassystem einer Brennkraftmaschine, bei dem eine erste Zustandsgröße, die den Beladungszustand des Partikelfilters charakterisiert, und eine zweite Zustandsgröße, die weitere Einflüsse auf die Regeneration des Partikelfilters berücksichtigt ermittelt werden, sieht vor, dass die erste Zustandsgröße anhand von Messgrößen ermittelt wird, die den Zustand des Partikelfilters charakterisieren, dass die zweite Zustandsgröße den Zustand der Brennkraftmaschine, die Umgebungsbedingungen und/oder den Fahrertyp charakterisiert, dass bei ersten Werten der ersten Zustandsgröße die Regeneration abhängig von der ersten und der zweiten Zustandsgröße eingeleitet wird und dass bei zweiten Werten der ersten Zustandsgröße die Regeneration bei allen Werten der zweiten Zustandsgröße eingeleitet wird.

Durch Berücksichtigung der zweiten Zustandsgröße, welche den Zustand der Brennkraftmaschine, die Umgebungsbedingungen und/oder den Fahrertyp charakterisiert, kann eine gegebenenfalls erforderliche Regeneration des Partikelfilters verbrauchsgünstig durchgeführt werden, sofern die Werte der ersten Zustandsgröße die Berücksichtigung der zweiten Zustandsgröße noch zulassen.

Vorteilhafte Weiterbildungen und Ausgestaltungen der erfindungsgemäßen Vorgehensweise ergeben sich aus abhängigen Ansprüchen.

Eine Maßnahme sieht vor, dass die zweite Zustandsgröße abhängig von wenigstens einer der Größen vorgebbar ist, die eine Drehzahl der Brennkraftmaschine, eine Einspritzmenge, eine Last, ein Abgasvolumenstrom, eine Temperaturgröße, eine Fahrgeschwindigkeit und/oder eine Zeit seit der letzten Regeneration charakterisiert. Die zweite Zustandsgröße spiegelt günstige Betriebsbedingungen wieder, von denen ausgehend nur eine vergleichsweise geringe Energie zur weiteren Temperaturerhöhung des Partikelfilters erforderlich ist.

Eine andere Maßnahme sieht vor, dass abhängig von der zweiten Zustandsgröße Schwellenwerte vorgebbar sind, abhängig von denen die Regeneration eingeleitet und/oder beendet wird.

Mit dieser Maßnahme ist eine Anpassung des Einleitens und des Beendens der Partikelfilter-Regeneration an die vorliegenden Bedingungen möglich.

Die erfindungsgemäße Vorrichtung zur Steuerung der Regeneration eines Partikelfilters im Abgassystem einer Brennkraftmaschine, bei dem eine erste Zustandsgröße, die den Beladungszustand des Partikelfilters charakterisiert, und eine zweite Zustandsgröße, die weitere Einflüsse auf die Regeneration des Partikelfilters berücksichtigt, ermittelt werden, sieht vor, dass die erste Zustandsgröße anhand der Signale wenigstens eines Sensors ermittelt wird, welche den Zustand des Partikelfilters charakterisieren, dass die zweite Zustandsgröße den Zustand der Brennkraftmaschine, die Umgebungsbedingungen und/oder den Fahrertyp charakterisiert, dass Mittel vorgesehen sind, die bei ersten Werten der ersten Zustandsgröße die Regeneration abhängig von der ersten und der zweiten Zustandsgröße einleiten und die bei zweiten Werten der ersten Zustandsgröße die Regeneration bei allen Werten der zweiten Zustandsgröße einleiten.

Die mit der erfindungsgemäßen Vorrichtung erzielbaren Vorteile entsprechen denen, die mit dem erfindungsgemäßen Verfahren erzielt werden.

Weitere vorteilhafte Ausgestaltungen und Weiterbildungen der Erfindung ergeben sich aus der weiteren Beschreibung.

### Zeichnung

Die Erfindung wird nachstehend anhand der in der Zeichnung dargestellten Ausführungsformen erläutert. Es zeigen Figur 1 ein Blockdiagramm der erfindungsgemäßen Steuerung, Figur 2 und Figur 3 jeweils ein Flussdiagramm einer erfindungsgemäßen Ausgestaltung und Figur 4 eine Tabelle zur Verdeutlichung der erfindungsgemäßen Vorgehensweise.

### Beschreibung der Ausführungsbeispiele

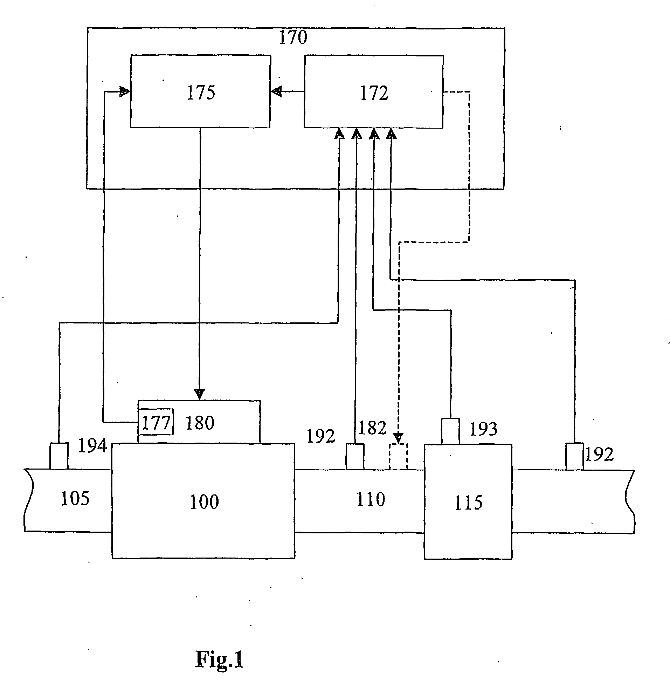

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren sind verschiedene Sensoren vorgesehen, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisieren. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weiter Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung durchführt. Mittels der Nacheinspritzung ist es möglich, gezielt Kohlenwasserstoffe in das Abgas einzubringen, die über eine Temperaturerhöhung zur Regeneration.des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Solche Abgasnachbehandlungssysteme müssen in bestimmten Abständen einen Sonderbetriebszustand durchlaufen. Bei einem Partikelfilter werden in diesem Sonderbetriebszustand die im Filter angesammelten Partikel verbrannt. Zur Einleitung dieses Sonderbetriebszustands, beispielsweise der Regeneration eines Partikelfilters, müssen bestimmte Anforderungen erfüllt sein, so muss beispielsweise die Temperatur des Filters und damit die Abgastemperatur bestimmte Werte annehmen. Die Einleitung dieses Regenerationsprozesses ist problematisch. Wird er zu früh eingeleitet, so hat dies einen erhöhten Kraftstoffverbrauch zur Folge. Wird er zu spät eingeleitet; so führt dies zum einen zu einem erhöhten Kraftstoffverbrauch, da der Abgasgegendruck ansteigt. Ferner kann der Fall eintreten, dass bei der Regeneration sehr hohe Temperaturen im Filter entstehen, was unter ungünstigen Bedingungen zu einer Beschädigung desselben führen kann.

Zur Einleitung des Regenerationsprozesses wird durch temperatursteigernde oder zündtemperatursenkende Maßnahmen gewährleistet, dass die Partikel im Filter oxidiert werden.

Beim folgenden beschriebenen Ausführungsbeispiel wird die Regeneration eingeleitet, wenn der Druckverlust im Abgassystem einen Schwellenwert, der abhängig von der Motordrehzahl vorgebbar ist, übersteigt. Der Druckverlust ergibt sich aus Messwerten des Druckes vor und nach dem Abgasnachbehandlungssystem 115.

Erfindungsgemäß wird der Schwellenwert für den Druckverlust im Abgassystem abhängig von der Motordrehzahl im unbeladenen und beladenen Zustand gemessen und in einem Kennfeld abgelegt. Damit einzelne stochastische Überschreitungen des Schwellenwerts nicht zu unerwünschten Auslösung einer Regeneration führt, wird die Anzahl der Überschreitungen aufsummiert. Dabei ist die Anzahl K der Überschreitungen eine weitere Zustandsgröße, die den Regenerationsprozess charakterisiert. Liegt die Anzahl der Überschreitungen unterhalb eines ersten Schwellenwerts, so erfolgt keine Regeneration, liegt sie oberhalb des ersten aber unterhalb eines zweiten Schwellenwerts, so kann eine Regeneration eingeleitet werden, wenn günstige Betriebsbedingungen vorliegen. Ist die Zahl größer als der zweite Schwellenwert, so erfolgt eine Regeneration auch bei ungünstigen Bedingungen.

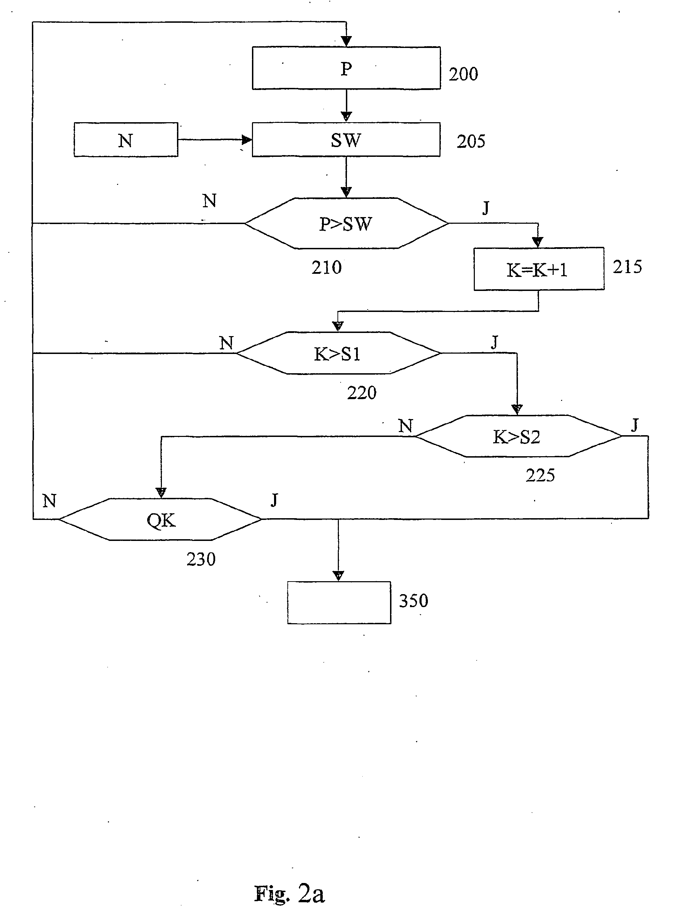

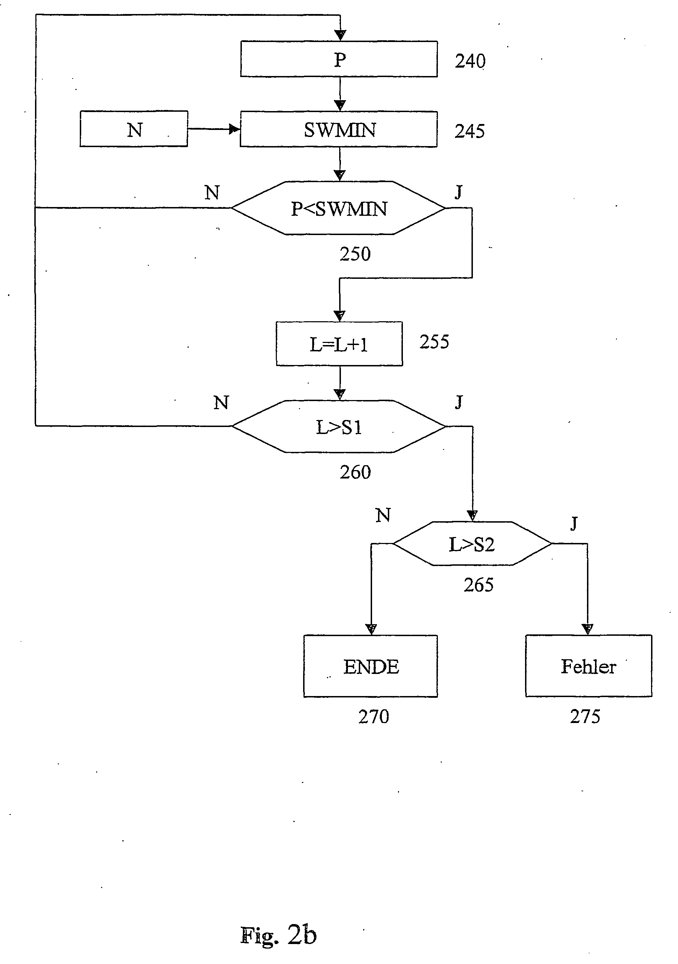

Wird die Regeneration eingeleitet, wird die Anzahl L der Unterschreitung mit einer minimalen Schwelle SWMIN überprüft. Ist die Zahl L der Unterschreitungen kleiner als ein erster Schwellenwert, so wird weiter regeneriert. Ist die Zahl L der Unterschreitungen größer als ein erster Schwellenwert und kleiner als ein zweiter Schwellenwert, so endet das Regenerationsprogramm, andernfalls, wenn die Zahl der Unterschreitungen L größer als ein zweiter Schwellenwert ist, wird ein Fehler erkannt. Im Folgenden wird die Vorgehensweise anhand des Flussdiagrammes der Figuren 2a und 2b beschrieben.

In einem ersten Schritt 200 wird eine Größe P bestimmt, die den Beladungszustand des Partikelfilters charakterisiert. Hierzu wird in der dargestellten Ausführungsform der Druckverlust ausgewertet. Hierbei handelt es sich um die Druckdifferenz zwischen dem Eingang und dem Ausgang des Partikelfilters.

Anschließend in Schritt 205 wird ausgehend von der Drehzahl der Brennkraftmaschine und/oder anderen Betriebskenngrößen, wie beispielsweise der Last der Brennkraftmaschine und/oder der eingespritzten Kraftstoffmenge, ein Schwellenwert SW ermittelt. Dieser Schwellenwert SW ist so gewählt, dass er einer Druckdifferenz entspricht, der bei beladenem Partikelfilter vorliegt.

Die anschließende Abfrage 210 überprüft, ob die Druckdifferenz P größer als der Schwellenwert SW ist. Ist dies nicht der Fall, so setzt das Programm mit Schritt 200 fort. Erkennt die Abfrage 210, dass der Druckverlust P größer als der Schwellenwert SW ist, so wird in Schritt 215 ein Zähler K um den Wert 1 erhöht. Die sich anschließende Abfrage 220 überprüft, ob der Wert K des Zählers größer als ein erster Wert S1 ist. Ist dies nicht der Fall, so setzt das Programm ebenfalls mit Schritt 200 fort. Erkennt die Abfrage, dass der Inhalt des Zählers größer als der erste Wert S1 ist, so überprüft eine Abfrage 225, ob der Zählerwert größer als ein zweiter Wert S2 ist. Ist dies der Fall, so wird in Schritt 235 die Regeneration des Partikelfilters eingeleitet. Dies bedeutet, ist die Anzahl der Überschreitungen des Schwellenwerts SW größer als der zweite Wert S2, so wird auf jeden Fall die Regeneration eingeleitet.

Erkennt die Abfrage 225, dass der Wert des Zählers K kleiner als der zweite Wert S2 ist, so folgt eine Abfrage 230, die überprüft, ob bestimmte Betriebszustände vorliegen. Ist dies nicht der Fall, so folgt Schritt 200. Ist dies der Fall, d. h. es liegen entsprechende Betriebszustände vor, die für eine Regeneration günstig sind, so wird die Regeneration in Schritt 235 durchgeführt.

Dies bedeutet, wenn der Beladungszustand des Filters einer gewissen Wert erreicht, so erfolgt bei Vorliegen von günstigen Betriebsbedingungen eine Regeneration. Bei Erreichen eines weiteren Beladungszustandes erfolgt unabhängig vom Betriebszustand die Regeneration des Filters.

Als Betriebszustand wird vorzugsweise die eingespritzte Kraftstoffmenge oder eine dieser Größe entsprechende Größe verwendet. Alternativ oder ergänzend kann auch die Abgastemperatur oder ein Temperaturwert, der die Temperatur des Abgasnachbehandlungssystems charakterisiert verwendet werden.

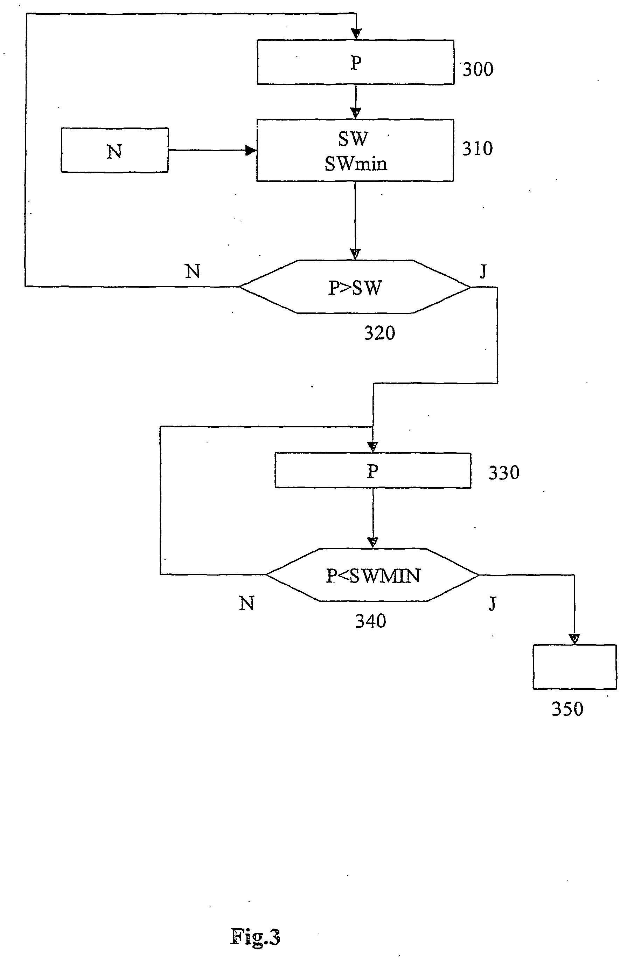

Eine weitere Ausführungsform des erfindungsgemäßen Verfahrens ist in Figur 3 am Beispiel eines Flußdiagrammes dargestellt.

Jede Regeneration eines Partikelfilters benötigt zusätzlichen Kraftstoff bedingt durch zusätzliche Nacheinspritzungen bzw. durch Betriebszustände mit schlechterem Wirkungsgrad. Durch geeignete Verfahren kann dieser Mehrverbrauch reduziert werden. Erfindungsgemäß wird dies dadurch gewährleistet, dass die Einleitung der Regeneration und/oder die Dauer der Regeneration abhängig vom Zustand der Brennkraftmaschine und/oder des Abgasnachbehandlungssystems verbrauchsoptimal festgelegt wird.

So wird bei Vorliegen guter Regenerationsbedingungen, beispielsweise bei hoher Last- und hoher Abgastemperatur der Schwellenwert für die Beladung, bei dem die Regeneration eingeleitet wird, zu kleineren Werten verschoben, um die guten Bedingungen zur Regeneration auszunutzen. Dabei wird die Regeneration bei Vorliegen guter Bedingungen bereits durchgeführt, auch wenn sie noch nicht zwingend notwendig ist. Erfindungsgemäß wird in Zuständen, bei denen eine Regeneration nur schwer möglich ist, d. h. bei schlechten Regenerationsbedingungen die Regeneration nur solange durchgeführt, um eine Verstopfung des Filters zu vermeiden, d. h. der Schwellwert zur Beendigung der Regeneration wird entsprechend zu höheren Werten verschoben.

D. h. es wird eine flexible motorzustandsabhängige Bestimmung der Ein- bzw. Ausschaltgrenzen der Regeneration gewählt. Eine entsprechende Vorgehensweise ist als Flussdiagramm in Figur 3 dargestellt. In einem ersten Schritt 300 wird der Beladungszustand P des Partikelfilters erfasst. Hierzu kann beispielsweise der Differenzdruck zwischen Ein- und Ausgang des Partikelfilters verwendet werden. Anschließend in Schritt 310 werden ein erster Schwellenwert SW und ein zweiter Schwellenwert SWMIN ausgehend vom Betriebszustand der Brennkraftmaschine und/oder des Partikelfilters bestimmt. Hierzu wird vorzugsweise die Drehzahl N und/oder ein Signal bezüglich der eingespritzten Kraftstoffmenge QK verwendet.

Der erste Schwellenwert SW gibt den Wert an, mit dem die Regeneration einzuleiten ist. Der zweite Schwellenwert SWMIN gibt den Wert an, bei dem die Regeneration zu beenden ist. Anschließend in Schritt 320 wird der Beladungszustand mit dem Schwellenwert SW verglichen. Ist der Beladungszustand größer als der erste Schwellenwert SW, so wird die Regeneration eingeleitet, andernfalls setzt das Programm mit Schritt 300 fort. Wird die Regeneration eingeleitet, so wird in Schritt 330 der Beladungszustand erneut erfasst und anschließend in Schritt 340 mit dem zweiten Schwellenwert SWMIN verglichen. Ist der Beladungszustand kleiner als der zweite Schwellenwert, so wird weiterhin in Schritt 330 regeneriert und der Beladungszustand neu erfasst. Ist der Beladungszustand kleiner als der zweite Schwellenwert SWMIN, so wird in Schritt 350 die Regeneration beendet.

Erfindungsgemäß ist dabei vorgesehen, dass die Schwellenwerte laufend an den aktuellen Beladungszustand angepasst werden. Bevorzugt wird daher der zweite Schwellenwert zwischen den Schritten 330 und 340 jeweils aktuell neu berechnet.

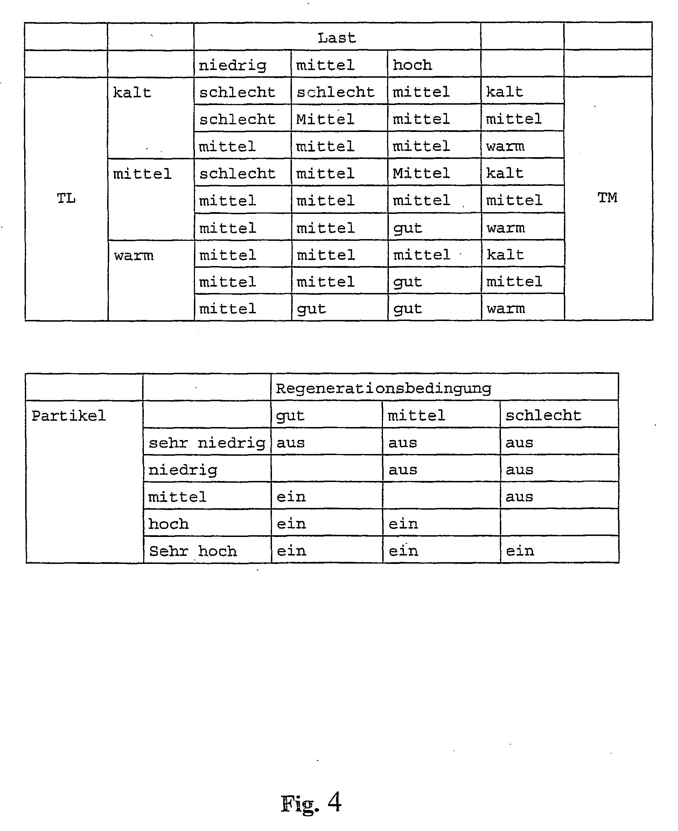

Vorzugsweise werden in Schritt 310 die Schwellenwerte aus Kennlinien oder Kennfeldern ausgelesen. Die Bestimmung dieser Kennlinien und Kennfelder im Rahmen der Applikation ist sehr aufwendig. Alternativ ist deshalb vorgesehen, dass zur Einleitung oder Beendigung der Regeneration ein sogenanntes Fuzzysystem verwendet wird. Dabei werden verschiedene Eingangsgrößen, wie die Lufttemperatur, die Motortemperatur, die Last und die Rußmasse bewertet und anschließend mit Hilfe einer Fuzzy-Logik verknüpft. Eine entsprechende Tabelle zur Verdeutlichung dieser Vorgehensweise ist in Figur 4 dargestellt.

In Teilfigur 4a sind tabellarisch die Lufttemperatur TL, die Motortemperatur TM und die Last aufgetragen. Die Temperaturwerte werden vorzugsweise mittels der Sensoren 194 und 177 erfasst. Als Lastgröße wird bei einer direkt einspritzenden Brennkraftmaschine vorzugsweise eine Größe verwendet, die der eingespritzte Kraftstoffmenge charakterisiert.

Dabei sind drei Lastbereiche, die mit niedrig, mittel und hoch bezeichnet sind, sowie drei Temperaturbereiche "kalt", "mittel" und "warm" sowohl für die Ladeluft als auch für die Motortemperatur TM aufgeführt. Zu jeder Kombination aus Last, Motortemperatur TM und Lufttemperatur TL ist ein Bewertungswert für eine mögliche Regeneration bestimmt. Dabei wird zwischen "schlecht", "mittel" und "gut" unterschieden. Der Wert "gut" ergibt sich insbesondere bei hoher Last und hohen Temperaturen. Der Wert "schlecht" ergibt sich insbesondere bei niederen Lasten und niederen Temperaturen. Die angegebene Tabelle ist dabei nur beispielhaft gewählt, es können auch andere Werte vorgegeben sein.

In Figur 4b ist eine zweite Tabelle dargestellt, bei der die Regenerationsbedingungen und die Partikelbeladung aufgetragen sind. Bei der Partikelbeladung wird zwischen "sehr niedrig", "niedrig", "mittel", "hoch" und "sehr hoch" unterschieden. Bei den Regenerationsbedingungen sind die Werte "gut", "mittel" und "schlecht" der Tabelle der Figur 4a aufgetragen. Jedem Wertepaar wird der Zustand "Regeneration ausgeschaltet" oder "Regeneration eingeschaltet" zugeordnet. Ist die Anzahl der Partikel niedrig, d. h. der Beladungszustand ist gering oder sehr gering, erfolgt in der Regel keine Regeneration. Bei einer mittleren Partikelbeladung erfolgt nur bei guten Regenerationsbedingungen eine Regeneration, wobei bei sehr hohen Beladungszuständen generell eine Regeneration erfolgt.

Auch diese Tabellenwerte sind nur beispielhaft gewählt.

Bei einer weiteren Ausgestaltung der erfindungsgemäßen Vorgehensweise werden verschiedene Kenngrößen und Parameter, die im Motorsteuergerät vorliegen, bei der Entscheidung, ob und mit welchem Maßnahmen eine Regeneration durchgeführt wird, berücksichtigt. Ausgehend von den Signalen und Größen, die im Steuergerät vorliegen, wird eine Bewertungszahl bestimmt, die für den Zustand des Motors und/oder des Abgassystems charakteristisch ist.

Zur Festlegung der durchzuführenden Regenerationsmaßnahme wird die Bewertungszahl B mit dem aktuellen Beladungszustand P des Partikelfilters verknüpft. Daraus ergeben sich die folgenden Vorteile. Eine Einleitung der Regeneration, wenn diese nicht erfolgreich durchgeführt werden kann erfolgt nur dann, wenn sie absolut notwendig ist, d. h. der Filter zu verstopfen droht. Eine vorzeitige Einleitung der Regenerationsmaßnahmen erfolgt, wenn die Filterbeladung einen entsprechenden Wert erreicht hat, der Zustand von Motor- und Abgassystem sowie der Fahrzustand eine Regeneration begünstigen. Desweiteren können geeignete Maßnahmen abhängig vom Betriebszustand ausgewählt werden, wenn eine Regeneration notwendig ist. Durch diese Maßnahmen kann insgesamt der Verbrauch an Kraftstoff minimiert werden.

Die zur Verfügung stehenden Daten, wie beispielsweise die Motordrehzahl, die Einspritzmenge, der Abgasvolumenstrom, die Abgastemperatur insbesondere vor dem Katalysator, die Motortemperatur, die Umgebungstemperatur, die Fahrgeschwindigkeit und/oder die Zeit seit der letzten Regeneration, werden ausgewertet. Ausgehend von diesen Größen wird die Bewertungszahl B ermittelt. Der Beladungszustand P des Partikelfilters wird ausgehend von verschiedenen Messgrößen, beispielsweise der Druckdifferenz zwischen dem Aus- und Eingang des Filters bestimmt.

Die einzelnen Signale werden gefiltert. Die Filterung erfolgt vorzugsweise mittels eines PT1-Filters, das kurzzeitige Signaländerungen ausblendet. Insbesondere ist vorgesehen, dass kurzfristige Änderungen der Betriebszustände nicht berücksichtigt werden. So wird beispielsweise die Änderung der Drehzahl, der eingespritzten Kraftstoffmenge und/oder anderer Größen beim Gangwechsel durch die Filterung so beeinflusst, dass keine Änderung des Betriebszustandes erkannt wird.

Durch Vergleich mit verschiedenen Schwellwerten der erfassten Größen wird in Schritt 500 die Bewertungszahl B für den aktuellen Zustand der Brennkraftmaschine und/oder des Abgassystems bestimmt.

So ist beispielsweise vorgesehen, dass bei großen Motordrehzahlen, großen Einspritzmengen, einem kleinen Abgasvölumenstrom, einer hohen Abgastemperatur, insbesondere vor dem Katalysator, einer hohen Motortemperatur, einer hohen Umgebungstemperatur, eine hohe Bewertungszahl vorgegeben wird, die ein Indiz für eine günstige Regeneration ist. Bei kleinen Motordrehzahlen, kleinen Einspritzmengen, einem großen Abgasvolumenstrom, einer kleinen Abgastemperatur, einer kleinen Motortemperatur, einer kleinen Umgebungstemperatur wird dagegen eine kleine Bewertungszahl vorgegeben, die ein Indiz für eine ungünstige Regeneration ist.

Ferner wird der Abstand zur letzten Regeneration, insbesondere der letzten erfolgreich durchgeführten Regeneration, bei der Vorgabe der Beweretungszahl B berücksichtigt. Dabei wird vorzugsweise die Zeit, in der die Brennkraftmaschine und/oder das Abgasbehandlungssystem Betrieben wurde, berücksichtigt. Alternativ kann auch die seit der letzten Regeneration eingespritzte Kraftstoffmenge oder eine die Kraftstoffmenge charakterisierende Größe verwendet werden. Anstelle der Zeit kann auch die vom Fahrzeug zurückgelegte Distanz in die Ermittlung der Berwetungszahl B eingehen.

Der Beladungszustand P des Partikelfilters wird ausgehend von verschiedenen Messgrößen, beispielsweise der Druckdifferenz zwischen dem Aus- und Eingang des Filters bestimmt. In Schritt 510 wird die Größe P bestimmt, die den Beladungszustand charakterisiert.

In Schritt 520 werden ausgehend von der Bewertungszahl und dem Beladungszustand Maßnahmen zur Regeneration eingeleitet. Bevorzugt werden unterschiedliche Maßnahmen abhängig von der Bewertungszahl B und/oder dem Beladungszustand P vorgegeben.

Ein Beispiel ist die Vorgabe der Maßnahmen ausgehend von der Bewertungszahl B und dem Beladungszustand P ist in Teilfigur 4b dargestellt. Dabei sind sechs unterschiedliche Bewertungszahlen B für den Betriebszustand und sechs Bewertungszahlen P für den Beladungszustand vorgesehen. Dies ist nur beispielhaft gewählt. Es können auch andere Werte mehr oder weniger Bewertungszahlen gewählt werden. Jeder Kombination aus Bewertungszahl B und Ladungszustand P wird eine Maßnahme M zugeordnet. Dabei können auch unterschiedliche oder Kombinationen von unterschiedlichen Maßnahmen vorgesehen sein.

Als eine Maßnahme können Massnahmen im Bereich der Kraftstoffzumessung vorgesehen sein. So ist beispielsweise vorgesehen, dass eine Nacheinspritzung erfolgt, um Kohlenwasserstoffe in das Abgas einzubringen. Alternativ kann der Kraftstoff auch unmittelbar in den Abgastrakt eingespritzt werden. Desweiteren kann vorgesehen sein, dass der Einspritzverlauf verändert wird. So kann beispielsweise vorgesehen sein, dass der Schwerpunkt der Einspritzung in Richtung spät verschoben oder dass eine Voreinspritzung und/oder eine Nacheinspritzung erfolgt und/oder dass diese zeitlich verschoben werden.

Ferner können Massnahmen im Bereich der Luftzufuhr zur Brennkraftmaschine vorgesehen sein. So kann beispielsweise die Zufuhr der Frischluftmenge mittels einer Drosselklappe reduziert, die Menge an rückgeführten Abgasen erhöht oder der Ladedruck verändert werden.

Desweiteren sind andere Maßnahmen, die zur Erhöhung der Abgastemperatur führen, möglich. So kann beispielsweise eine Zusatzheizung, insbesondere eine elektrische Zusatzheizung des Partikelfilters vorgesehen sein. Ferner ist es möglich bestimmte Stoffe, die eine Erhöhung der Temperatur und/oder eine Verringerung der Reaktionstemperatur, bewirken, dem Kraftstoff zugesetzt oder in das Abgassystem zugemessen werden.

Bei einer weiteren Ausgestaltung erfolgt die Regeneration abhängig von der Fahrweise des Fahrers. Bei einem sportlichen Fahrer, bei dem der Motor fast immer betriebswarm, ist eine Regeneration des Partikelfilters mit relativ geringem Aufwand zu erreichen. Bei einem solchen Fahrer kann die Partikelfiltersteuerung davon ausgehen, dass ein regenerationsgünstiger Betriebspunkt häufig erreicht wird. Eine anstehende Regeneration bei zufällig schlechtem Regenerationszustand kann hinausgezögert werden. Bei einem sehr vorsichtigem oder zurückhaltendem Fahrer, oder einem Fahrer, der häufig nur Kurzstrecken fährt, nutzt die Partikelfiltersteuerung jeden Motorzustand zur Regeneration aus, bei dem eine Regeneration möglich ist. Hierdurch kann verhindert werden, dass bei einer späteren Kurzstreckenfahrt, mit deutlich höherem Mehrkonsum an Kraftstoff, regeneriert werden muss.

Bevorzugt werden abhängig von der Fahrweise des Fahrers die Schwellenwerte SW zur Einleitung der Regeneration und der Schwellwert SWmin zur Beendigung der Regeneration abhängig von der Fahrweise vorgegeben. Erfindungsgemäß wird bei der Ausführungsform gemäß Figur 2 in Schritt 205 der Schwellwert SW abhängig von der Fahrweise gewählt, bei Ausführungsform gemäß Figur 3 werden die Schwellwerte in Schritt 310 abhängig von der Fahrweise gewählt.

Vorzugsweise wird nicht nur die aktuelle Fahrweise, sondern auch die mittlere Fahrweise über einen größeren Zeitraum berücksichtigt. Hierzu werden Informationen über die Fahrweise in einem nicht flüchtigen Speicher der Steuereinheit abgelegt. Vorzugsweise wird die Fahrweise abhängig von der erreichten Motortemperatur, der Fahrdauer und die über einen bestimmten Zeitraum erreichte maximale Antriebskraft und/oder Leistung der Brennkraftmaschine ausgewertet. Ausgehend von diesen Größen werden die Fahrer in beispielsweise drei Klassen aufgeteilt. Dies sind vorzugsweise Kurzstreckenfahrer, normale Fahrer und Langstreckenfahrer. Die Einteilung erfolgt beispielsweise dadurch, dass innerhalb der gespeicherten Fahrten die Anzahl der Fahrten bestimmt wird, in denen die Mindestmotortemperatur, die Fahrdauer bzw. die Antriebskraft bestimmte Schwellenwerte überschreiten. Ausgehend von der Häufigkeit und/oder der Dauer der Überschreitung werden die Fahrer in eine der Klassen eingeteilt. Aufgrund der Klassifizierung werden dann die Schwellenwerte zur. Einleitung oder Beendigung der Regeneration vorgegeben.

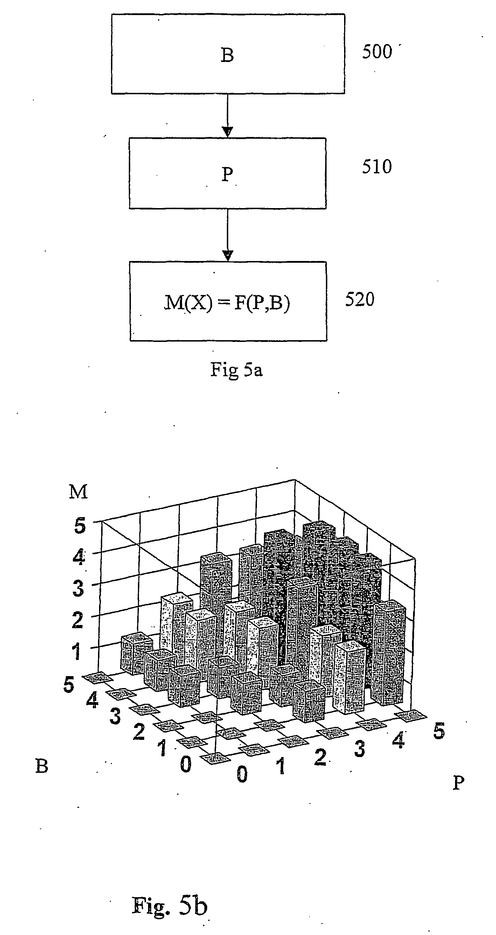

Eine mögliche Vorgehensweise einer vereinfachten Ausführungsform zur Ermittlung des Fahrertyps ist in Figur 6 dargestellt. In einem ersten Schritt 600 werden verschiedene Betriebskenngrößen B, die die Fahrweise des Fahrers charakterisieren, erfasst. Dies sind vorzugsweise die Motortemperatur MT, die Fahrdauer BT und eine Größe, die die Mindestantriebskraft charakterisiert. Hierzu kann beispielsweise die Last und/oder die einzuspritzende Kraftstoffmenge QK herangezogen werden. Als weitere Größen können auch ergänzend oder alternativ die jeweilige Fahrstrecke bei jedem Fahrzyklus, die Motorleistung und/oder das Fahrerwunschsignal ausgewertet werden.

Eine erste Abfrage 610 überprüft, ob ein erstes dieser Signale in dem dargestellten Beispiel ist dies die Motortemperatur TM größer als eine Mindestmotortemperatur SWTM ist. Ist dies der Fall, so wird in Schritt 620 ein Zähler FT um 1 erhöht. Ist dies nicht der Fall, so wird in Schritt 625 der Zähler FT um 1 verringert. Anschließend in einer zweiten Abfrage 630 wird überprüft, ob eine zweite Größe, in dem dargestellten Beispiel ist es die Betriebsdauer BT, größer als eine Mindestfahrdauer ist. Ist dies der Fall, so wird in Schritt 640 ebenfalls der Zähler FT um 1 erhöht. Ist dies nicht der Fall, so wird in Schritt 645 der Zähler um 1 verringert. An die Abfrage 630 können sich weitere nicht dargestellte Abfragen, bei denen weitere Größen auf einen Schwellwert abgefragt werden, anschließen.

Die sich anschließende Abfrage 650 überprüft, ob der Zähler FT größer als ein Schwellenwert SWFT ist. Ist dies der Fall, so wird in Schritt 660 erkannt, dass der Fahrer beispielsweise ein Langstreckenfahrer ist, ist dies nicht der Fall, so wird in Schritt 665 erkannt, dass der Fahrer eher ein Kurzstreckenfahrer ist.

Vorzugsweise wird diese Funktion unmittelbar vor, beim oder nach dem Abstellen des Fahrzeugs durchgeführt. Der entsprechende Wert des Zählers oder die in den Schritten 650 bis 665 festgestellte Klassifizierung des Fahrers wird abgespeichert, damit sie bei der nächsten Inbetriebnahme des Fahrzeugs wieder zur Verfügung steht. Die so ermittelten Daten werden dann bei der Steuerung der Regeneration berücksichtigt.

Die Größe P, die den Beladungszustand des Partikelfilters charakterisiert, kann ausgehend von der Druckdifferenz zwischen dem Druck am Eingang und am Ausgang des Partikelfilters bestimmt werden. Es können aber auch andere Vorgehensweisen zur Bestimmung des Beladungszustandes verwendet werden. So kann der Beladungszustand auch ausgehend von verschiedenen Größen simuliert werden.

In den dargestellten Ausführungsbeispielen wird beim Beladungszustand nur zwischen zwei Zuständen unterschieden. Es kann auch vorgesehen sein, dass zwischen weiteren Zuständen unterschieden wird.

## Patentansprüche

1. Verfahren zur Steuerung der Regeneration eines Partikelfilters (115) im Abgassystem (110) einer Brennkraftmaschine (100), bei dem eine erste Zustandsgröße, die den Beladungszustand (P) des Partikelfilters (115) charakterisiert, und eine zweite Zustandsgröße, die weitere Einflüsse auf die Regeneration des Partikelfilters (115) berücksichtigt, ermittelt werden, **dadurch gekennzeichnet, dass** die erste Zustandsgröße anhand von Messgrößen ermittelt wird, die den Zustand des Partikelfilters (115) charakterisieren, dass die zweite Zustandsgröße den Zustand der Brennkraftmaschine (100), die Umgebungsbedingungen und/oder den Fahrertyp charakterisiert, dass bei ersten Werten der ersten Zustandsgröße die Regeneration abhängig von der ersten und der zweiten Zustandsgröße eingeleitet wird und dass bei zweiten Werten der ersten Zustandsgröße die Regeneration bei allen Werten der zweiten Zustandsgröße eingeleitet wird.

2. Verfahren nach Anspruch 1, **dadurch gekennzeichnet, dass** die zweite Zustandsgröße abhängig von wenigstens einer der Größen vorgebbar ist, die eine Drehzahl der Brennkraftmaschine (110), eine Einspritzmenge, eine Last, ein Abgasvolumenstrom, eine Temperaturgröße, eine Fahrgeschwindigkeit und/oder eine Zeit seit der letzten Regeneration charakterisiert.

3. Verfahren nach Anspruch 1 oder 2, **dadurch gekennzeichnet, dass** abhängig von der zweiten Zustandsgröße Schwellenwerte vorgebbar sind, abhängig von denen die Regeneration eingeleitet und/oder beendet wird.

4. Vorrichtung zur Steuerung der Regeneration eines Partikelfilters (115) im Abgassystem (110) einer Brennkraftmaschine (100), bei dem eine erste Zustandsgröße, die den Beladungszustand (P) des Partikelfilters (115) charakterisiert, und eine zweite Zustandsgröße, die weitere Einflüsse auf die Regeneration des Partikelfilters (115) berücksichtigt, ermittelt werden, **dadurch gekennzeichnet, dass** die erste Zustandsgröße anhand der Signale wenigstens eines Sensors (193) ermittelt wird, welche den Zustand des Partikelfilters (115) charakterisieren, dass die zweite Zustandsgröße den Zustand der Brennkraftmaschine (100), die Umgebungsbedingungen und/oder den Fahrertyp charakterisiert, dass Mittel vorgesehen sind, die bei ersten Werten der ersten Zustandsgröße die Regeneration abhängig von der ersten und der zweiten Zustandsgröße einleiten und die bei zweiten Werten der ersten Zustandsgröße die Regeneration bei allen Werten der zweiten Zustandsgröße einleiten.

## Claims

1. Method for controlling the regeneration of a particulate filter (115) in the exhaust system (110) of an internal combustion engine (100), in which a first state variable, which characterizes the loading state (P) of the particulate filter (115), and a second state variable, which takes account of further influences on the regeneration of the particulate filter (115), are determined, **characterized in that** the first state variable is determined on the basis of measurement variables which characterize the state of the particulate filter (115), **in that** the second state variable characterizes the state of the internal combustion engine (100), the ambient conditions and/or the type of driver, **in that** at first values of the first state variable the regeneration is initiated as a function of the first and second state variables, and **in that** at second values of the first state variable the regeneration is initiated at all values of the second state variable.

2. Method according to Claim 1, **characterized in that** the second state variable can be predetermined as a function of at least one of the variables which characterizes an engine speed of the internal combustion engine (110), an injection quantity, a load, an exhaust gas volumetric flow, a temperature variable, a driving speed and/or a time since the last regeneration.

3. Method according to Claim 1 or 2, **characterized in that** threshold values, as a function of which the regeneration is initiated and/or terminated, can be predetermined as a function of the second state variable.

4. Apparatus for controlling the regeneration of a particulate filter (115) in the exhaust system (110) of an internal combustion engine (100), in which a first state variable, which characterizes the loading state (P) of the particulate filter (115), and a second state variable, which takes account of further influences on the regeneration of the particulate filter (115), are determined, **characterized in that** the first state variable is determined on the basis of the signals from at least one sensor (193) which characterize the state of the particulate filter (115), **in that** the second state variable characterizes the state of the internal combustion engine (100), the ambient conditions and/or the type of driver, **in that** there are means which at first values of the first state variable initiate the regeneration as a function of the first and second state variables and which at second values of the first state variable initiate the regeneration at all values of the second state variable.

## Revendications

1. Procédé de commande de la régénération d'un filtre à particules (115) dans le système d'échappement (110) d'un moteur à combustion interne (100), selon lequel on détermine une première grandeur d'état qui caractérise l'état de charge (P) du filtre à particules (115), ainsi qu'une deuxième grandeur d'état qui prend en compte d'autres influences sur la régénération du filtre à particules (115),
**caractérisé en ce que**
la première grandeur d'état est déterminée à l'aide de grandeurs de mesure caractérisant l'état du filtre à particules (115), la deuxième grandeur d'état caractérise l'état du moteur à combustion interne (100), les conditions environnantes et/ ou le type de conducteur, et
pour des premières valeurs de la première grandeur d'état, la régénération est mise en oeuvre en fonction de la première et de la deuxième grandeur d'état, et
pour des deuxièmes valeurs de la première grandeur d'état, la régénération est mise en oeuvre pour toutes les valeurs de la deuxième grandeur d'état.

2. Procédé selon la revendication 1,
**caractérisé en ce que**
la deuxième grandeur d'état peut être prédéterminée en fonction d'au moins l'une des grandeurs qui caractérisent un régime du moteur à combustion interne (110), une quantité d'injection, une charge, un débit volumique des gaz d'échappement, une grandeur de température, une vitesse de conduite et/ou un temps écoulé depuis la dernière régénération.

3. Procédé selon la revendication 1 ou 2,
**caractérisé en ce qu'**
en fonction de la deuxième grandeur d'état, on peut prédéterminer des valeurs de seuil en fonction desquelles la régénération est mise en oeuvre et/ou terminée.

4. Dispositif de commande de la régénération d'un filtre à particules (115) dans le système d'échappement (110) d'un moteur à combustion interne (100), dans lequel on détermine une première grandeur d'état qui caractérise l'état de charge (P) du filtre à particules (115), ainsi qu'une deuxième grandeur d'état qui prend en compte d'autres influences sur la régénération du filtre à particules (115),
**caractérisé en ce que**
la première grandeur d'état est déterminée à l'aide des signaux d'au moins un capteur (193), qui caractérisent l'état du filtre à particules (115), la deuxième grandeur d'état caractérise l'état du moteur à combustion interne (100), les conditions environnantes et/ou le type de conducteur, et des moyens mettent en oeuvre la régénération pour des premières valeurs de la première grandeur d'état, en fonction de la première et de la deuxième grandeur d'état, et pour des deuxièmes valeurs de la première grandeur d'état, mettent en oeuvre la régénération pour toutes les valeurs de la deuxième grandeur d'état.
